Europäisches Patentamt

European Patent Office

Office européen des brevets

(19)

(11) **EP 1 381 222 A2**

(12) **EUROPÄISCHE PATENTANMELDUNG**

(43) Veröffentlichungstag:
     **14.01.2004 Patentblatt 2004/03**

(51) Int Cl.⁷: **H04N 3/15**

(21) Anmeldenummer: **03009000.5**

(22) Anmeldetag: **17.04.2003**

(84) Benannte Vertragsstaaten:
     **AT BE BG CH CY CZ DE DK EE ES FI FR GB GR
     HU IE IT LI LU MC NL PT RO SE SI SK TR**
     Benannte Erstreckungsstaaten:
     **AL LT LV MK**

(30) Priorität: **11.07.2002 DE 10231573**

(71) Anmelder: **Bodenseewerk Gerätetechnik GmbH
     88662 Überlingen (DE)**

(72) Erfinder: **Tholl, Hans Dieter
     88690 Uhldingen (DE)**

(74) Vertreter: **Weisse, Renate Dr. et al
     Weisse & Wolgast
     Bökenbuschstr. 41
     42555 Velbert (DE)**

(54) **Vorrichtung zum Abtasten einer optischen Informationsebene mittels eines bildauflösenden Detektors**

(57)     Die Erfindung betrifft eine Vorrichtung zum Abtasten einer optischen Informationsebene mittels eines bildauflösenden Detektors, der ein Raster von Detektorelementen aufweist, bei welcher jedem Detektorelement ein Teilbereich der Informationsebene zugeordnet ist, welcher eine Mehrzahl von optischen Auflösungselementen enthält und aus welchem optische Strahlung auf das Detektorelement geleitet wird, und bei welchem zur Erhöhung der Auflösung in der Informationsebene ein Raster von verstellbaren Mikroblenden angeordnet ist, welche nacheinander unterschiedliche Teile der Teilbereiche freigeben. Der Erfindung liegt die Aufgabe zugrunde, bei einer Vorrichtung der eingangs genannten Art das Signal-zu-Rausch-Verhältnis zu verbessern. Zu diesem Zweck ist jedem Teilbereich (20) ein Mikroblendenbereich zugeordnet ist, in welchem durch Verstellung der Mikroblenden nacheinander verschiedene Muster von jeweils mehreren optischen Auflösungselementen (26) des Teilbereichs (20) freigegeben werden, so daß die Strahlung aus diesen Auflösungselementen (26) das zugehörige Detektorelement (18) beaufschlagen. Es sind Decodiermittel (30) vorgesehen, auf welche die dabei erhaltenen Signale jedes Detektorelements (18) aufgeschaltet sind zur Erzeugung von Informationen über die Helligkeitswerte der einzelnen Auflösungselemente (26). Bildrekonstruktionsmittel (32) dienen zur Erzeugung eines durch die Helligkeitswerte der Auflösungselemente (26) bestimmten Gesamtbildes der optischen Informationsebene (12).

Fig.1

EP 1 381 222 A2

**Beschreibung**

Die Erfindung betrifft eine Vorrichtung zum Abtasten einer optischen Informationsebene mittels eines bildauflösenden Detektors, der ein Raster von Detektorelementen aufweist, bei welcher jedem Detektorelement ein Teilbereich der Informationsebene zugeordnet ist, welcher eine Mehrzahl von optischen Auflösungselementen enthält und aus welchem optische Strahlung auf das Detektorelement geleitet wird, und bei welchem zur Erhöhung der Auflösung in der Informationsebene ein Raster von verstellbaren Mikroblenden angeordnet ist, welche nacheinander unterschiedliche Teile der Teilbereiche freigeben.

Üblicherweise ist die optische Informationsebene eine Zwischenbildebene, in welcher durch ein abbildendes optisches System ein Zwischenbild eines Objektfeldes erzeugt wird. Es kann sich aber auch um eine Pupillenebene handeln.

Es sind Abtastvorrichtungen bekannt, die einen großen Raumwinkel erfassen und das Objektfeld aus diesem Raumwinkel mittels eines abbildenden optischen Systems auf einem bildauflösenden Detektor mit einem Raster von Detektorelementen abbilden. Dabei ist die erzielbare Auflösung durch die Abmessungen und Anzahl der Detektorelemente begrenzt. In der Bildebene oder Zwischenbildebene des abbildenden optischen Systems sind "Teilbereiche" definiert, die jeweils einem Detektorelement zugeordnet sind. Die Teilbereiche sind den zugeordneten Detektorelementen optisch konjugiert, d.h. alle Strahlen, welche durch den Teilbereich der Bildebene oder Zwischenbildebene treten und nur diese fallen auf das Detektorelement. Die Teilbereiche bilden ein relativ grobes Raster. Die Auflösung des optischen Systems ist höher als die Auflösung des Detektors. Ein Detektorelement ist von einer Mehrzahl unterscheidbarer Bildelemente beaufschlagt. Solche Bildelemente werden nachstehend als "Auflösungszellen" bezeichnet.

Durch die DE 1 99 04 914 A1 ist bekannt, zur Erhöhung der Auflösung in einer Zwischenbildebene ein mikrooptisches Blendenraster anzuordnen. Das Rastermaß dieses Blendenrasters entspricht dem Rastermaß der Teilbereiche. Das Mikroblendenraster enthält Blendenöffnungen, die kleiner sind als die Teilbereiche. Diese Blendenöffnungen sind mit dem Mikroblendenraster in der Zwischenbildebene in Schritten verschiebbar. Damit wird jeweils der größte Teil jedes Teilbereichs abgedeckt. Es fallen nur die Strahlen auf das zugehörige Detektorelement, die durch die kleine Blendenöffnung hindurchtreten. Jeder Teilbereich wird so Auflösungszelle für Auflösungszelle abgetastet. Die dabei von den Detektorelementen erhaltenen Bildinformationen werden nach Beendigung der Abtastung zu einem "elektronischen Bild" höherer Auflösung ineinandergeschachtelt.

Die bekannte Vorrichtung hat verschiedene Nachteile: Die Bestrahlungsstärke an den Detektorelementen ist reduziert. Dadurch ergibt sich ein ungünstiges Signal-zu-Rausch-Verhältnis. Ein großer Teil der einfallenden Strahlen wird an dem Mikroblendenraster reflektiert. Diese reflektierten Strahlen bilden eine vagabundierende Streustrahlung in dem optischen System. Diese Streustrahlung kann durch Reflexion auf den Detektor gelangen.

Der Erfindung liegt die Aufgabe zugrunde, bei einer Vorrichtung der eingangs genannten Art das Signal-zu-Rausch-Verhältnis zu verbessern.

Erfindungsgemäß wird diese Aufgabe dadurch gelöst, daß

(a) jedem Teilbereich ein Mikroblendenbereich zugeordnet ist, in welchem durch Verstellung der Mikroblenden nacheinander verschiedene Muster von jeweils mehreren optischen Auflösungselementen des Teilbereichs freigegeben werden, so daß die Strahlung aus diesen Auflösungselementen das zugehörige Detektorelement beaufschlagen,

(b) Decodiermittel vorgesehen sind, auf welche die dabei erhaltenen Signale jedes Detektorelements aufgeschaltet sind zur Erzeugung von Informationen über die Helligkeitswerte der einzelnen Auflösungselemente und

(c) Bildrekonstruktionsmittel vorgesehen sind zur Erzeugung eines durch die Bildinformationen der Auflösungselemente bestimmten Gesamtbildes der optischen Informationsebene.

Durch die Mikroblendenbereiche werden somit jeweils Muster oder Kombinationen von mehreren Auflösungszellen gleichzeitig auf die einzelnen Detektorelemente aufgeschaltet. Diese Muster werden variiert. Die Detektorsignale sind dann praktisch verschiedene Linearkombinationen (mit den Faktoren "1" oder "0") der Bildinformationen, z.B. Helligkeitswerte, der Auflösungselemente. Aus dem auf diese Weise erhaltenen Satz von Detektorsignalen eines Detektorelements werden dann durch Decodiermittel rechnerisch die einzelnen Bildinformationen gewonnen und zu einem Gesamtbild zusammengesetzt.

Bei jedem Meßschritt ist das Detektorelement von einer relativ hohen Intensität beaufschlagt. Damit wird das Signal-zu-Rausch-Verhältnis verbessert. Jedes Auflösungselement trägt zu der relativ hohen Intensität zwar auch nur einen relativ geringen Anteil bei. In dem Satz von Detektorsignalen ist jedoch das Auflösungselement bei verschiedenen Intensitäten entsprechend verschiedenen Mustern mehrfach berücksichtigt. Auch die reflektierten Strahlen, die zu Streustrahlung führen, werden vermindert, da bei jedem Abtastschritt der überwiegende Teil der Strahlen zu dem Detektorelement durchgelassen wird.

Ausgestaltungen der Erfindung sind Gegenstand der Unteransprüche

Ausführungsbeispiele der Erfindung sind nachstehend unter Bezugnahme auf die zugehörigen Zeichnungen näher erläutert.

Fig.1     ist eine schematische Darstellung und zeigt den prinzipiellen optischen Aufbau der Vorrichtung.

Fig. 2     zeigt eine in der Zwischenbildebene von Fig. 1 angeordnete Mikroblendenanordnung in Verbindung mit den in der Zwischenbildebene durch die Detektorelemente definierten Teilbereichen.

Fig.3     zeigt einen einzelnen Teilbereich mit Auflösungselementen, von denen einige durch die Mikroblendenanordnung abgedeckt sind.

Fig.4     ist eine Darstellung ähnlich Fig.2, wobei jedoch zur Vereinfachung jeder Teilbereich nur vier Auflösungselemente enthält, zur Erläuterung der Auswertung der Detektorsignale.

Fig.5     veranschaulicht die Auswertung der Detektorsignale.

Fig.6     zeigt schematisch einen abgewandelten optischen Aufbau, bei welchem die Teilbereiche durch ein mikrooptisches Linsenraster jeder für sich auf den zugehörigen Detektorelementen abgebildet werden.

Fig.7     zeigt schematisch eine Anordnung, bei welcher in der Zwischenbildebene ein mikrooptisches Linsenraster von Feldlinsen angeordnet ist, wobei jede Feldlinse eine im Unendlichen liegende Pupille auf einem zugeordneten, in der Brennebene des Linsenrasters angeordneten Detektorelement abbildet.

Fig.8     zeigt schematisch eine Anordnung ähnlich Fig.5, bei welcher die in der Brennebene des mikrooptischen Linsenrasters erzeugten Pupillenbilder durch ein makrooptisches, abbildendes System auf dem Detektor abgebildet werden.

Fig.9     zeigt eine Anordnung, bei welcher die in der Brennebene des mikrooptischen Linsenrasters erzeugten Pupillenbilder durch ein zweites mikrooptisches Linsenraster jedes für sich auf zugeordneten Detektorelementen abgebildet werden.

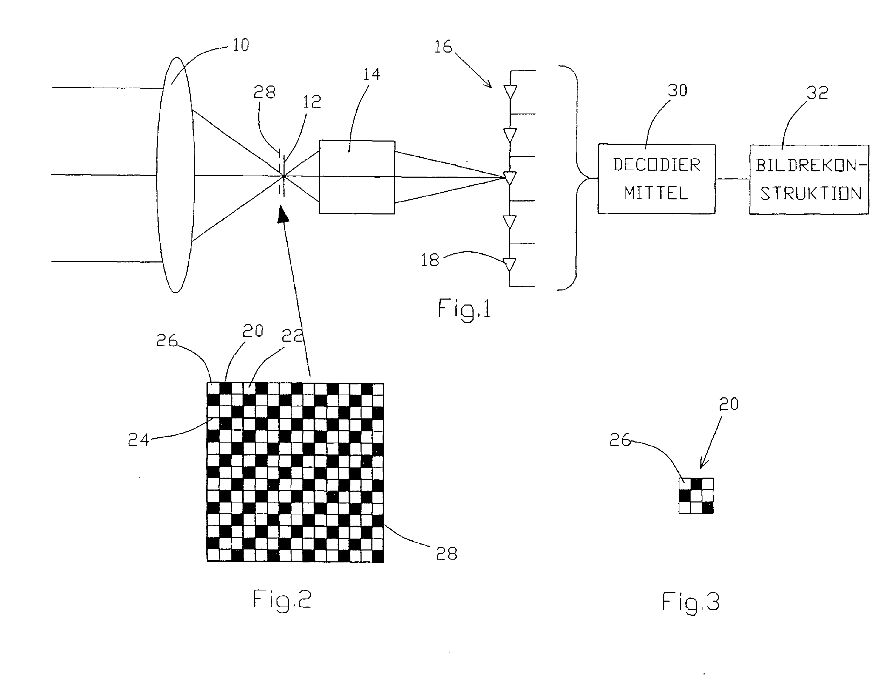

In Fig. 1 ist mit 10 ein erstes abbildendes optisches System bezeichnet. Das erste abbildende optische System 10 bildet ein im Unendlichen liegendes Objektfeld in einer Zwischenbildebene 12 ab. Die Zwischenbildebene 12 wird durch ein zweites abbildendes optisches System 14 auf einem bildauflösenden Detektor 16 abgebildet. Der bildauflösende Detektor 16 besteht aus einem Raster oder Mosaik von einzelnen Detektorelementen 18.

Jedem Detektorelement 18 ist ein Teilbereich 20 in der Zwischenbildebene zugeordnet. Dieser Teilbereich 20 ist zu dem Detektorelement in bezug auf das optische System 14 optisch konjugiert. Das zweite abbildende optische System 14 bildet genau diesen Teilbereich 20 auf dem zugehörigen Detektorelement 18 ab, oder der Teilbereich ergibt sich durch "Rückwärtsabbildung" des Detektorelements 18 in die Zwischenbildebene 12. In Fig.2 sind die quadratischen Teilbereiche durch dick ausgezogene Linien 22 und 24 begrenzt.

Die Auflösung des optischen Systems 10 ist wesentlich größer als die durch die Teilbereiche 20 repräsentierte Auflösung des Detektors 16. Jeder der Teilbereiche 20 enthält hier 3 x 3 "Auflösungselemente" z. B. 26. Das sind Bereiche der Zwischenbildebene 12, die jeder eigene Bildinformation enthält. Es ist nun ein Mikroblendenraster 28 vorgesehen, durch welches die Teilbereiche 20 abgetastet werden und die Bildinformation dieser Auflosungselemente 26 gewonnen werden kann. Im Gegensatz zu der bekannten Anordnung nach der DE 1 99 04 914 A1 enthält das Mikroblendenraster 28 aber nicht für jeden Teilbereich 20 nur eine einzige, dem Auflösungselement entsprechende Blendenöffnung. Vielmehr enthält das Mikroblendenraster 28 mit dem Rastermaß der Teilbereiche ein Muster von durchsichtigen und undurchsichtigen Feldern, wobei jedes dieser Felder einem Auflösungselement entspricht. In dem vorliegenden Ausführungsbeispiel enthält somit das Mikroblendenraster 28 für jeden Teilbereich 20 ein Muster von 3 x 3 Feldern entsprechend den 3 x 3 Auflösungselementen 26. Bei der dargestellten Position des Mikroblendenrasters 28 sind von diesen Feldern in jedem Teilbereich 20 das zweite Feld der ersten Zeile, das erste Feld der zweiten Zeile und das dritte Feld der dritten Zeile undurchsichtig. Die übrigen Felder sind durchsichtig.

Das Mikroblendenraster 28 läßt somit von jedem Teilbereich 20 Strahlen aus einer Mehrzahl von Auflösungselementen 26 durch und deckt nur einige Auflösungselemente ab. Auf das zugehörige Detektorelement 18, das die durch diesen Teilbereich 20 verlaufenden Strahlen empfängt, fällt somit eine relativ hohe Strahlungsintensität. Diese Strahlungsintensität ist wesentlich höher als die Strahlungsintensität, die durch eine einzige Blendenöffnung nach Art der DE 1 99 04 914 A1 fällt. Damit wird das Signalzu- Rausch-Verhältnis günstiger. Es wird auch nicht wie bei der DE 1 99 04 914 A1 der größte Teil der Strahlung an dem Mikroblendenraster reflektiert, was vagabundierende Streustrahlung bewirkt. Vielmehr wird der größte Teil der einfallenden Strahlung auf den Detektor 16 geleitet.

Die Signale der einzelnen Detektorelemente 18 liefern dabei allerdings nicht unmittelbar die Bildinformation, z.B. Bildhelligkeit, der einzelnen Auflösungselemente 26. Vielmehr ist die an dem Detektorelement 18 bei jedem Abtastungsschritt auftretende Intensität eine Art Linearkombination der von den verschiedenen Auflösungselementen 26 einfallenden Einzelintensitäten, jeweils mit Faktoren "1" oder "0" entsprechend dem Muster des Blendenrasters 28.

Die Abtastung des Teilbereiches 20 erfolgt nun in der Weise, daß das Muster des Blendenrasters 28 variiert wird. Nach jedem Abtastungsschritt wird das Muster in definierter Weise verändert Die an dem Detektorelement 18 treten nacheinander verschiedene Intensitäten auf entsprechend den verschiedenen durch die Muster bestimmten Linearkombinationen. Dem Detektor nachgeschaltete Decodiermittel 30 berechnen aus den verschiedenen Intensitäten, die den verschiedenen Mustern zugeordnet sind, die Einzelintensitäten, die den einzelnen Auflösungselementen 26 zuzuordnen sind. Das ist praktisch die Lösung von neun Gleichungen mit neun Unbekannten.

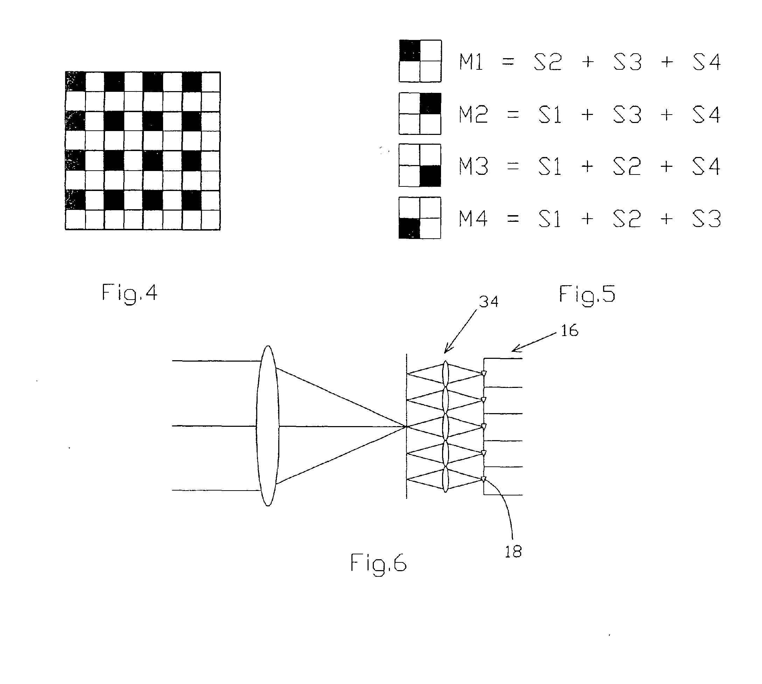

Das Prinzip ist nachstehend anhand der vereinfachten Darstellung von Fig.4 und 5 erläutert. Fig.4 ist ähnlich Fig.2. Jeder Teilbereich enthält hier jedoch nur vier Auflösungselemente. Das Blendenraster deckt in jedem Teilbereich jeweils nur ein Auflösungselement ab. Das Blendenraster kann durch Piezosteller in vier Positionen verstellt werden, nämlich aus der dargestellten ersten Position, in welcher jeweils das linke obere Auflösungselement jedes Teilbereichs abgedeckt ist, einen Schritt von der Kantenlänge eines Auflösungselements nach rechts in Fig.4 in eine zweite Position, in welcher das rechte obere Auflösungselement jedes Teilbereichs abgedeckt ist, von der zweiten Position einen Schritt nach unten in Fig.4 in eine dritte Position, in welcher das rechte untere Auflösungselement jedes Teilbereichs abgedeckt ist, und schließlich aus der ersten Position einen Schritt nach unten in eine vierte Position, in welcher das linke untere Auflösungselement jedes Teilbereichs abgedeckt ist. Die vier Positionen sind für einen Teilbereich in Fig. 5 untereinander dargestellt. In jeder der vier Positionen ergibt sich an dem zugehörigen Detektorelement ein Meßwert M1, M2, M3 bzw. M4. Bezeichnet man mit S1, S2, S3 und S4 die Signalanteile, die von den vier Auflösungselementen herrühren, dann ist unter Vernachlässigung von Meßfehlern:

$$M1 = S2 + S3 + S4$$

$$M2 = S1 + S3 + S4$$

$$M3 = S1 + S2 + S4$$

$$M4 = S1 + S2 + S3.$$

Das sind vier Gleichungen mit vier Unbekannten, die sich nach S1, S2, S3 und S4 auflösen lassen.

Die so erhaltenen Bildinformationen für die einzelnen Auflösungselemente 26 werden dann durch Bildrekonstruktionsmittel 32 zur Erzeugung eines elektronischen Gesamtbildes hoher Auflösung ineinandergeschachtelt.

Die Veränderung des Mikroblendenrasters 28 kann in der Weise erfolgen, daß das Mikroblendenraster 28 zwei oder mehr Rasterscheiben mit Mustern von durchsichtigen und undurchsichtigen Feldern aufweist, die zur Veränderung des resultierenden Musters gegeneinander verschiebbar sind. Die Verschiebung kann dabei um jeweils einen Schritt durch Piezosteller erfolgen.

Bei der Ausführung nach Fig. 1 wird die Zwischenbildebene 12 durch ein makrooptisches System 14 verzeichnungsfrei auf den Detektor 16 abgebildet. Bei der Anordnung nach Fig.4 ist statt eines makrooptischen Systems ein mikrooptisches Linsenraster 34 vorgesehen. Jede Linse des mikrooptischen Linsenrasters 34 bildet einen Teilbereich 20 der Zwischenbildebene 12 auf ein zugehöriges Detektorelement 18 ab. Linsenraster und Detektorelemente sind in Fig.4 als lineare Anordnung dargestellt. Tatsächlich ist das Linsenraster ein zweidimensionales Raster, und auch die Detektorelemente 18 bilden eine zweidimensionale Anordnung.

Bei den Anordnungen von Fig. 1 und Fig.4 werden Auflösungselemente 26, die am Rand eines Teilbereichs 20 liegen wie das Auflösungselement 26 links oben in Fig.3, auch auf den Rand des zugehörigen Detektorelements 18 reell abgebildet. Dort fällt die Empfindlichkeit des Detektorelements 18 in der Regel ab. Solche Ungleichförmigkeiten der Empfindlichkeit des Detektorelements 18 über dessen Oberfläche hinweg führen zu entsprechenden Ungleichförmigkeiten der Detektorsignale: Selbst bei gleichmäßiger Helligkeit der Auflösungselemente würden die (gleichen) Einzelintensitäten der Auflösungselemente 26 zu unterschiedlichen Signalanteilen ab den Detektorsignalen führen. Das wird durch die Anordnungen nach Fig.5 bis 7 vermieden.

Bei der Anordnung nach Fig.6 ist in der Zwischenbildebene 12 zusätzlich zu dem Blendenraster ein Linsenraster 36 angeordnet, dessen Rastermaß wieder dem Rastermaß der Teilbereiche 20 entspricht. Die Linsen dieses Linsenrasters sind Feldlinsen, welche in einer Ebene 38 Pupillenbilder der Eintrittspupille des ersten abbildenden optischen Systems 10 erzeugen. Diese Pupillenbilder sind jeweils gleichmäßig ausgeleuchtet. Die Helligkeit jedes Pupillenbildes hängt aber von der Intensität des durch das Blendenraster hindurchtretenden Lichts ab. Bei der Anordnung nach Fig.5 sind die Detektorelemente 18 unmittelbar in der Ebene 38 angeordnet. Dabei wird jedes Pupillenbild auf einem zugehörigen Detektorelement erzeugt. Das Detektorelement wird dadurch über seine ganze Fläche hinweg gleichmäßig belichtet. Die Detektorsignale sind dadurch unabhängig davon, wo in dem Teilbereich 20 die betrachteten Auflösungselemente 26 sitzen.

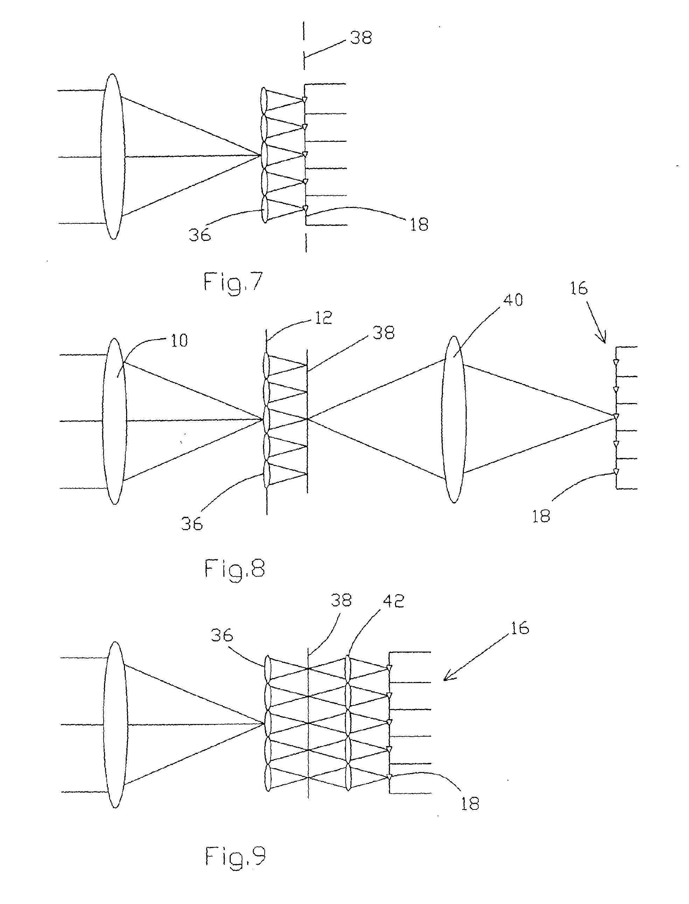

Bei der Anordnung nach Fig6, werden die Pupillenbilder von einem makrooptischen zweiten abbildenden System 40 in der Ebene des Detektors 16 abgebildet. Bei der Anordnung nach Fig.7 ist das makrooptische abbildende System 40 durch ein zweites mikrooptisches Linsenraster 42 ersetzt. Das Rastermaß des Linsenrasters 42 entspricht dem Rastermaß der Teilbereiche 20 und des Linsenrasters 36. Jede Linse des Linsenrasters 42 bildet ein in der Ebene 38 erzeugtes Pupillenbild auf einem zugehörigen Detektorelement 18 des Detektors 16 ab.

**Patentansprüche**

1. Vorrichtung zum Abtasten einer optischen Informationsebene (12) mittels eines bildauflösenden Detektors (16), der ein Raster von Detektorelementen (18) aufweist, bei welcher jedem Detektorelement (18) ein Teilbereich (20) der Informationsebene (12) zugeordnet ist, welcher eine Mehrzahl von optischen Auflösungselementen (26) enthält und aus welchem optische Strahlung auf das Detektorelement (18) geleitet wird, und bei welchem zur Erhöhung der Auflösung in der Informationsebene (12) ein Raster von verstellbaren Mikroblenden (28) angeordnet ist, welche nacheinander unterschiedliche Teile der Teilbereiche (20) freigeben, **dadurch gekennzeichnet, daß**

    (a) jedem Teilbereich (20) ein Mikroblendenbereich zugeordnet ist, in welchem durch Verstellung der Mikroblenden nacheinander verschiedene Muster von jeweils mehreren optischen Auflösungselementen (26) des Teilbereichs (20) freigegeben werden, so daß die Strahlung aus diesen Auflösungselementen (26) das zugehörige Detektorelement (18) beaufschlagen,

    (b) Decodiermittel (30) vorgesehen sind, auf welche die dabei erhaltenen Signale jedes Detektorelements (18) aufgeschaltet sind zur Erzeugung von Informationen über die Helligkeitswerte der einzelnen Auflösungselemente (26) und

    (c) Bildrekonstruktionsmittel (32) vorgesehen sind zur Erzeugung eines durch die Helligkeitswerte der Auflösungselemente (26) bestimmten Gesamtbildes der optischen Informationsebene (12).

2. Vorrichtung nach Anspruch 1, **dadurch gekennzeichnet, daß** als optische Informationsebene durch ein erstes abbildendes optisches System (10) ein Zwischenbild eines Objektfeldes in einer Zwischenbildebene (12) erzeugt wird.

3. Vorrichtung nach Anspruch 2, **dadurch gekennzeichnet, daß** durch ein zweites abbildendes optisches System (14) die Zwischenbildebene (12) mit dem Raster von Mikroblenden (28) auf den bildauflösenden Detektor (16) abgebildet wird, wobei die Teilbereiche (20) der Zwischenbildebene (12) zu den Detektorelementen (18) des Detektors (16) optisch konjugiert sind.

4. Vorrichtung nach Anspruch 3, **dadurch gekennzeichnet, daß** das zweite abbildende optische System ein Raster von Mikrolinsen (34) ist, deren Rastermaß dem Rastermaß der Teilbereiche (20) entspricht und von denen jede einen Teilbereich (20) der Zwischenbildebene (12) auf ein zugehöriges Detektorelement (18) abbildet.

5. Vorrichtung nach Anspruch 2, **dadurch gekennzeichnet, daß** in der Zwischenbildebene (12) ein Raster von mikrooptischen Feldlinsen (36) angeordnet ist, deren Rastermaß dem Rastermaß der Teilbereiche (20) entspricht, wobei durch jede dieser Feldlinsen eine Pupille des abbildenden optischen Systems (10) in einer Ebene (38) abgebildet ist.

6. Vorrichtung nach Anspruch 5, **dadurch gekennzeichnet, daß** die Detektorelemente in der Ebene (38) der Pupillenbilder angeordnet sind, wobei jeder Feldlinse ein Detektorelement (18) zugeordnet ist.

7. Vorrichtung nach Anspruch 5, **dadurch gekennzeichnet, daß** ein zweites abbildendes optisches System (40;42) vorgesehen ist, welches die Ebene (38) der Pupillenbilder auf den Detektor (16) abbildet, wobei jedes Pupillenbild in dieser Ebene (38) auf ein Detektorelement (18) abgebildet wird.

8. Vorrichtung nach Anspruch 7, **dadurch gekennzeichnet, daß** das zweite abbildende optische System ein makrooptisches Objektiv (40) ist.

9. Vorrichtung nach Anspruch 7, **dadurch gekennzeichnet, daß** das zweite abbildende optische System ein zweites mikrooptisches Linsenraster (42) ist.

Fig.1

Fig.2

Fig.3

Fig.4

$M1 = S2 + S3 + S4$

$M2 = S1 + S3 + S4$

$M3 = S1 + S2 + S4$

$M4 = S1 + S2 + S3$

Fig.5

Fig.6

EP 1 381 222 A2

Fig.7

Fig.8

Fig.9